# EUROPÄISCHE PATENTSCHRIFT

(11) **EP 2 982 492 B1**
(45) Veröffentlichungstag und Bekanntmachung des Hinweises auf die Patenterteilung: **12.10.2016**
(21) Anmeldenummer: 14180245.4
(22) Anmeldetag: 07.08.2014
(51) Int. Cl.: B29C 67/04, B29C 70/88, B29L 31/14, B29K 105/04

(54) **Sinterverfahren, Sinterprodukt, Filtrationsmodul und Verwendung**
Sintering method, sintered product, filtration module and use
Procédé de frittage, produit fritté, module de filtration et utilisation

(43) Veröffentlichungstag der Anmeldung: 10.02.2016
(73) Patentinhaber: Helmholtz-Zentrum Geesthacht Zentrum für Material- und Küstenforschung GmbH, 21502 Geesthacht (DE); FutureCarbon GmbH, 95448 Bayreuth (DE)
(72) Erfinder: Otto, Christian, 21481 Lauenburg/Elbe (DE); Handge, Ulrich, 21335 Lüneburg (DE); Abetz, Volker, 21335 Lüneburg (DE); Aschenbrenner, Ortrud, 95447 Bayreuth (DE)
(74) Vertreter: Seemann & Partner Patentanwälte mbB

(56) Entgegenhaltungen:
- WO-A1-2008/118947
- DE-A1-102009 003 522
- DE-A1-102010 013 210
- BRINK A E ET AL: "SINTERING HIGH PERFORMANCE SEMICRYSTALLINE POLYMERIC POWDERS", POLYMER ENGINEERING AND SCIENCE, BROOKFIELD CENTER, US, Bd. 35, Nr. 24, Dezember 1995 (1995-12), Seiten 1923-1930, XP000583160, ISSN: 0032-3888, DOI: 10.1002/PEN.760352403

## Beschreibung

Die Erfindung betrifft ein Sinterverfahren zur Herstellung eines Sinterprodukts, insbesondere eines permeablen Filters mit durchgängiger Porosität, ein entsprechendes Sinterprodukt, ein Filtrationsmodul und eine Verwendung.

Die Erfindung betrifft allgemein die Herstellung funktionalisierter poröser und nicht-poröser polymerer Materialien, unter anderem für Membrananwendungen. Im Fall der vorliegenden Erfindung betrifft dies die Herstellung von Materialien mit Füllstoffen, beispielsweise mit Kohlenstoffnanoröhrchen (carbon nanotubes, CNT).

Herkömmliche Verfahren zur Herstellung entsprechender Membranen mit Kohlenstoffnanoröhrchen als Füllstoff sind relativ aufwendig. So ist aus DE 10 2009 003 522 A1 ein Verfahren zum Herstellen einer Mischung für eine PTFE-Membran mit anorganischen Materialien bekannt, bei dem ein Band extrudiert und kalandriert wird und das Band durch biaxiales Recken in zwei Richtungen gespannt wird, um eine Membran zu bilden und die Membran bei einer Temperatur zwischen ca. 200 °C und ca. 400 °C zwischen 1 und 120 Sekunden gesintert wird. Aufgrund des Extrusionsprozesses kann das Aspektverhältnis von Nanopartikeln hierbei reduziert werden.

Aus S. Majeed et al., "Multi-walled carbon nanotubes (MWCNT) mixed polyacrylonitrile (PAN) ultrafiltration membranes", Journal of Membrane Science 403-404 (2012), S. 101 bis 109, ist ein Phaseninversionsprozess bekannt, wobei ein Blend aus PAN und den MWCNT hergestellt wurde und hieraus in einem Phaseninversionsprozess eine Membran hergestellt wurde. Die MWCNT wurden zur Erhöhung der mechanischen Stabilität und Separationseignung der porösen Membranen verwendet. Ein Nachteil des Phaseninversionsverfahrens ist, dass bei diesem Prozess im Allgemeinen organische Lösungsmittel verwendet werden. Diese werden nach der Membranherstellung aus der Membran durch einen zeitaufwendigen Prozess ausgewaschen.

Ferner ist das Sintern von Polymeren mit verteilten CNT bekannt, etwa aus M. Wienecke et al., "PTFE membrane electrodes with increased sensitivity for gas sensor applications", Synthetic Metals 138 (2003), S. 165 bis 171. Dabei wurden PTFE-Membrane mit 25 µm Dicke gesintert, die auf einer Seite mit dünnen Filmen aus Kohlenstoff, Gold oder Silber beschichtet waren. MWCNT wurden zur weiteren Vergrößerung der Grenzfläche zwischen Gas, Elektrode und Elektrolyt verwendet.

Während in der genannten Veröffentlichung von M. Wienecke et al. noch eine nichtpartikuläre Membran gesintert wurde, offenbart beispielsweise M. Mu et al., "Cellular structures of carbon nanotubes in a polymer matrix improve properties relative to composites with dispersed nanotubes", Polymer 49 (2008), S. 1332 bis 1337, die Herstellung von Polymer-CNT-Kompositen mit segregierten Füllstoffnetzwerken. Hier wird ein elektrisch leitendes Komposit durch eine Kombination eines Polymers mit single wall carbon nanotubes (SWCNT) gebildet, wobei Polystyrolpellets mit SWCNT beschichtet wurden und dann heißgepresst wurden, um eine zusammenhängende zelluläre SWCNT-Struktur herzustellen. Die Pellets waren stabförmige Pellets mit einer Länge und einem Durchmesser von etwa 3 bis 4 mm. Die Beschichtung der Pellets mit SWCNT erfolgte in wässriger Lösung unter Ultraschallbehandlung und anschließender Trocknung bei einer Temperatur oberhalb der Glasübergangstemperatur des Polystyrols. Die elektrische Perkolationsschwelle, also der Schwellwert, bei dem elektrische Leitung einsetzt, verringert sich hierbei und die elektrische Leitfähigkeit erhöht sich signifikant gegenüber Kompositen, in denen die SWCNT gut verteilt sind.

Das Heißpressen von Polymer/CNT-Kompositen mit segregierter Netzwerkstruktur ist auch bekannt aus J. Du et al., "Comparison of electrical properties between multi-walled carbon nanotube and graphene nanosheet/high density polyethylene composites with a segregated network structure", CARBON 49 (2011), S. 1094 bis 1100. Hier erfolgte eine Vermischung des Polymers mit den Kohlenstoffpartikeln durch alkoholunterstützte Dispersion und Heißpressen. Die MWCNT und GNS (graphene nanosheets) verteilten sich entlang spezifischer Pfade und erzeugten ein segregiertes leitendes Netzwerk in der dichten Polymermatrix.

Auch das Sintern von nicht-porösen Polymer/CNT-Kompositen ist beispielsweise aus A. Mierczynska et al., "Segregated network polymer/carbon nanotubes composites", Central European Journal of Chemistry 2(2) (2004), S. 363 bis 370, bekannt. Hier wurde festgestellt, dass ein hochwertiges CNT-Material zu einer Verkleinerung der Perkolationsschwelle für die elektrische Leitfähigkeit führte, wobei bei dem höchstwertigen Material eine Perkolationsschwelle von 0,5 Gew.-% gefunden wurde. Hierzu wurden Mikrogranulate von Polyethylen mit ultrahohem Molekulargewicht mit CNT-Pulver in einem Mörser trocken gemischt und in einer Sinterform oberhalb des Schmelzpunktes von Polyethylen bei einem Druck von 5 MPa gesintert. Auch das derart hergestellte Material ist, wie alle zuvor genannten, porenlos.

In A. Brink et al. "Sintering High Performance Semicrystalline Polymeric Powders", Polymer Engineering and Science, Band 35, Nr. 24 (1995), Seiten 1923 bis 1930 ist beschrieben, wie Polyetheretherketon (PEEK) gesintert wird, als Alternative zu einem Schmelzen des Stoffes, um polymeres Cross-Linking zu vermeiden. Im untersuchten Vorgang wurde ein polymerisches Pulver zunächst bei Raumtemperatur kompaktifiziert, gefolgt von einem druckfreien Sintern des resultierenden Grünlings. Die Studie beschreibt den Einfluss der Partikelgröße, der Sintertemperatur und des Kompaktifizierungsdrucks auf die Verdichtung beim freien Sintern dieser Partikel.

Hiervon ausgehend, liegt der vorliegenden Erfindung die Aufgabe zugrunde, funktionalisierte poröse und ggf. nicht-poröse Materialien, u.a. für Membrananwendungen, zur Verfügung zu stellen, bei denen insbesondere eine niedrige Perkolationsschwelle für Perkolationsphänomene realisiert ist.

Diese Aufgabe wird durch ein Sinterverfahren zur Herstellung eines Sinterprodukts, insbesondere eines permeablen Filters mit durchgängiger Porosität, mit den folgenden Verfahrensschritten gelöst:
a) Einfüllen eines trockenen Sinterpulvers aus mit Nano- und/oder Mikropartikeln oberflächlich dekorierten Pulverpartikeln aus wenigstens einem Polymer in eine Sinterform,
b) Bringen des Sinterpulvers in der Sinterform auf Klopfdichte,
c) druckarmes Sintern des Sinterpulvers in der Sinterform zu einem permeablen Sinterprodukt mit durchgängiger Porosität.

Dieses Verfahren stellt eine besonders einfache Methode dar, funktionalisierte Sinterprodukte mit einstellbarer Porosität herzustellen. Die Porosität ist durch die Sinterdauer und Sintertemperatur einstellbar und lässt sich durch einfache Routineversuche ermitteln.

Das Sinterverfahren benutzt zur Erreichung der erfindungsgemäßen Vorteile Pulverpartikel, die oberflächlich mit Nano- und/oder Mikropartikeln dekoriert sind, so dass hier ein vergleichsweise kleiner Materialaufwand an Nano- und/oder Mikropartikeln notwendig ist. Diese werden im Verfahrensschritt a) in abgewogener Menge in die Sinterform gebracht. Im Verfahrensschritt b) wird das dekorierte Polymerpulver durch mechanisches Klopfen oder Vibrieren bei Raumtemperatur auf Klopfdichte oder Vibrationsdichte gebracht.

Eine weitere Besonderheit ist das druckarme Sintern des Sinterpulvers, wodurch die Dekoration der Pulverpartikel mit den Nanound/oder Mikropartikeln nicht oder nur wenig gestört wird. Hierzu werden im Verfahrensschritt c) die Verfahrensparameter beim Sinterprozess an die angestrebte Porosität angepasst, wobei eine druckarme Parameterführung gewählt wird.

Der gegebenenfalls vorkomprimierte Grünling wird auf die Sintertemperatur, ggfs. unter Druck, erwärmt. Die Sintertemperatur liegt oberhalb der Glasübergangstemperatur des amorphen Polymers bzw. der amorphen Phase bei teilkristallinen Polymeren. Die Sinterzeit wird bei gegebenem Druck und gegebener Temperatur so gewählt, dass während der Sinterzeit Sinterhälse zwischen den dekorierten Polymerpulverpartikeln ausgebildet werden. Die Sinterdauer hängt von der bekannten Viskosität des verwendeten Polymers bei der gewählten Sintertemperatur und, insbesondere beim Sintern unterhalb der Schmelztemperatur, von der Diffusionszeit der Polymerketten ab.

Auch die Konzentration der dekorierten Partikel spielt eine Rolle.

Eine höhere Konzentration der dekorierten Partikel kann die Diffusion der Polymerketten behindern und somit einen höheren Druck und eine längere Sinterdauer erfordern, um eine zu starke Versprödung des Sinterkörpers zu vermeiden. Bei ansonsten gleichen Verfahrensparametern führt ein zeitweise angewandter höherer Druck (typischerweise zwischen 1 und 20 MPa) zu einer Reduktion der Porosität und zu einer Zunahme der mechanischen Stabilität.

Nach dem Abschluss des Sinterns kühlt das Sinterprodukt ab und kann nach seiner Verfestigung aus der Sinterform entnommen werden.

Beim erfindungsgemäßen druckarmen Sintern können sich die aneinander anliegenden Pulverpartikel mit ihren oberflächlichen Dekorationen durch Ausbildung von Sinterhälsen miteinander verbinden, wobei diese Sinterhälse die oberflächliche Nanopartikel- bzw. Mikropartikeldekoration beinhalten und sich somit eine sehr lokalisierte dichte Struktur von Nano- und/oder Mikropartikeln ergibt. Im Falle von beispielsweise elektrisch leitfähigen Nano- und/oder Mikropartikeln führt dies zu einer starken Herabsetzung der Perkolationsschwelle.

Ein druckarmes Sintern im Rahmen der vorliegenden Erfindung bedeutet ein Sintern, das nicht, wie im Stand der Technik bekannt, während der gesamten Sinterdauer unter hohem Druck stattfindet, sondern vollständig oder wenigstens teilweise unter keinem oder nur geringem externen Druck. Beispielsweise kann im Falle einer geschlossenen Sinterform ein Deckel oder Zylinder auf dem Sinterpulver aufliegen. Dieser übt einen Druck von üblicherweise ca. 6 kPa aus, was weit entfernt ist von den üblicherweise aufgewendeten mehreren Dutzend MPa ist. Ohne extern auf den Deckel bzw. das Pulver ausgeübten Druck handelt es sich dabei allerdings im Rahmen der vorliegenden Anmeldung immer noch um ein druckarmes Sintern, da die Gewichtskraft des Deckels gegenüber üblicherweise angewandten Pressdrücken vernachlässigbar ist.

Die Dekoration der Pulverpartikel mit den Nano- und/oder Mikropartikeln kann in geeigneter Weise erfolgen. Ein Beispiel für eine mechanische Applikation ist beispielsweise aus der DE 10 2010 013 210 A1 bekannt, deren Offenbarungsgehalt vollinhaltlich in der vorliegenden Anmeldung aufgenommen sein soll. Hier werden eine polymere Grundsubstanz und ein kohlenstoffhaltiges Material in einen geschlossen zylindrischen Behälter eingebracht, in dem Behälter geschleudert und nach Fertigstellung des Polymer-Komposits aus dem Behälter entnommen. Auch andere Verfahren zur Dekoration der Polymerartikel sind erfindungsgemäß einsetzbar.

Das druckarme Sintern unter Beibehaltung einer durchgängigen Porosität bzw. Permeabilität hat den weiteren Vorteil, dass die Nanound/oder Mikropartikel während des Sintervorgangs nur einer geringen Diffusion und Deformation unterliegen und somit nicht stark in die Pulverpartikel eindiffundieren, so dass sie immer noch stark oberflächlich lokalisiert sind und daher eine Netzwerkstruktur beibehalten können. Das druckarme Sintern soll vor der Schließung der durchgängigen Porenstruktur abgebrochen werden, wobei auch in diesem Fall die lokalen Diffusions- und Deformationsvorgänge im Material klein genug sind, dass die zusammenhängende Struktur der Nano- und/oder Mikropartikel erhalten bleibt.

Dies ist bei einem druckbehafteten Sintern anders, da eine deutlich stärkere Diffusion auftritt und die segregierte Netzwerkstruktur sich stärker auflöst. Um beispielsweise eine Leitfähigkeit durch die zusammenhängende Struktur von leitfähigen Dekorationspartikeln zu erzeugen, ist dann eine höhere Konzentration an Dekorationspartikeln notwendig.

Unter Perkolationsphänomenen und einer Perkolationsschwelle wird im Rahmen der vorliegenden Erfindung die übliche Begrifflichkeit verstanden, wonach sich im gesinterten Pulver eine Struktur ausbildet, die das gesamte Pulver durchdringt. So kann beispielsweise eine Leitfähigkeit von einer Seite des fertiggestellten Sinterprodukts zur anderen durchgängig gegeben sein. Unterhalb der Perkolationsschwelle liegen einzelne untereinander unverbundene Domänen vor. Ein weiteres solches Perkolationsphänomen ist beispielsweise auch die Schließung der durchgängigen Porosität bzw. das Verschwinden der Permeabilität.

Die Perkolationsschwelle ist hierbei einerseits bezogen auf die Menge des eingesetzten Zusatzmaterials in Form von Nanound/oder Mikropartikeln, andererseits auch die Intensität des Sinterns bezüglich Temperatur, Dauer und ggf. angewandtem Druck.

Das erfindungsgemäße Sinterverfahren bleibt bezüglich der Porosität unterhalb der Perkolationsschwelle bezüglich der Ausbildung einer dichten Struktur. Ein anderes Perkolationsphänomen ist beispielsweise die elektrische Leitfähigkeit.

Die erfindungsgemäß zur Dekorierung verwendeten Partikel oder Moleküle befinden sich somit nur auf der Oberfläche der Sinterpartikel bzw. Pulverpartikel, aber nicht in deren Kern. Auf diese Weise können die Bauteileigenschaften gezielt beeinflusst werden. Darüber hinaus ist für diese Partikel generell eine niedrigere Perkolationsschwelle als in konventionell gemischten Kompositmaterialien in Bulkform vorhanden, was insbesondere für Perkolationsphänomene eine hohe Bedeutung besitzt. Der Begriff der oberflächlichen Dekoration der Pulverpartikeln mit Nano- und/oder Mikropartikeln, die im Rahmen der vorliegenden Erfindung auch als Dekorationspartikel bezeichnet werden können, bedeutet im Rahmen der vorliegenden Erfindung, dass die Pulverpartikel in wenigstens zwei Dimensionen deutlich größer sind als die Dekorationspartikel, vorzugsweise um einen Faktor 10 oder mehr. Damit wird eine gute Adhäsion der Dekorationspartikel an den Pulverpartikeln gewährleistet. Wenn die Nano- und/oder Mikropartikel relativ zu den Pulverpartikeln zu groß werden, können sie nicht mehr adhäsiv die Oberfläche der Pulverpartikel dekorieren, sondern es handelt sich dann um ein eher loses Gemisch.

Typische Größen der Pulverpartikel sind ca. 1 bis 100 µm, insbesondere 10 bis 100 µm. Typische Größen von CNT sind beispielsweise ein Durchmesser von 10 bis 40 nm und eine Länge von bis zu 25 µm. Aufgrund ihrer geringen Dicke zählen die CNT zu den Nanopartikeln.

Die verwendeten Pulverpartikel können auch poröse Pulverpartikel sein, was die Oberfläche und Porosität des Sinterprodukts erhöht. Die Poren ermöglichen auch eine bessere Anlagerung der Dekorationspartikel.

Bei dem erfindungsgemäßen Sinterverfahren handelt es sich um ein einfaches und ungefährliches Verfahren, das im industriellen Maßstab implementiert werden kann. Da beim Sinterprozess nur relativ geringe mechanische Spannungen auf das Sintermaterial wirken, stellt es außerdem ein schonendes Verfahren dar. Das Aspektverhältnis beispielsweise bei Kohlenstoffnanoröhrchen wird beim Sintern weniger reduziert als zum Beispiel bei der Extrusion.

Das Polymer ist vorzugsweise ein thermoplastisches Polymer oder eine Mischung oder ein Blend aus mehreren thermoplastischen Polymeren. Dieses bzw. diese kann bzw. können amorph oder teilkristallin sein. Bevorzugte Polymere, die auch in Mischungen oder Blends miteinander im Rahmen der Erfindung verwendbar sind, sind, nicht abschließend, Polystyrole, Polyolefine, insbesondere Polyethylen der Typen PE-LD, PE-HD, PE-LLD, PE-HMW, PE-UHMW oder Polypropylen, Polyamide, insbesondere PA-6, PA-66, PA-12 oder PA-11, Polyacrylnitril, Polyacrylsäure, PMMA, PET, PEEK, PEK, PES, PEI, PVDF, PC, PVC, PTFE, TPU, Cellulosederivate, insbesondere Celluloseacetat, Celluloseacetatphthalat oder Cellusloseacetobutyrat, PVB, PVA, PVAc, BMI, Vinylpolymere, Polyimide, Polyacetate, Polyester, Polyether, Polyacrylate, Polysilane oder Polyquinoxaline, oder thermoplastische Copolymere.

Die Pulverpartikel sind oder werden vorzugsweise mit Nanound/oder Mikropartikeln in Form von Kohlenstoffnanoröhrchen, Graphenpartikeln, Rußpartikeln, Titandioxidpartikeln und/oder magnetischen metallischen Partikeln oberflächlich dekoriert. Kohlenstoffnanoröhrchen, Graphenpartikel und Rußpartikel dienen beispielsweise zur Strukturverstärkung und zur Herstellung einer elektrischen Leitfähigkeit, können aber auch noch andere Funktionen übernehmen. Magnetische und metallische Partikel erzeugen ein Magnetfeld. Während des Sinterns können sie sich ausrichten und ein gemeinsames Magnetfeld erzeugen. Für die Dekorierung der Polymerpulverpartikel können auch Nanopartikel aus Titandioxid (TiO₂) verwendet werden. TiO₂-Nanopartikel bieten den Vorteil, dass sie die Hydrophilie des Nanopartikel-Polymer-Komposites erhöhen und dadurch Biofouling durch Bakterienwachstum verringern. Hydrophile, ungeladene Oberflächen sind ungünstige Adsorptionplätze für Proteine, die Bestandteil von bakteriellen Haftungsfilmen (Biofilmen) sind. Ohne Proteine können die Bakterien nur schlecht auf der Oberfläche verbleiben und leichter weggespült werden.

Die Nano- und/oder Mikropartikel sind vorzugsweise chemisch funktionalisiert, insbesondere durch Hinzufügung von hydrophilisierenden Gruppen. Auf diese Weise können die funktionellen Eigenschaften des Sinterprodukts gezielt eingestellt werden. Hydrophile Nebengruppen sind beispielsweise polare Nebengruppen wie -OH,COOH, Polyacrylsäure oder -OR, wobei R ein aromatischer oder aliphatischer Rest ist.

Kohlenstoffnanoröhren können ferner mit unterschiedlichen chemischen Gruppen, Seitenketten oder Nanopartikeln funktionalisiert werden, beispielsweise mit Hilfe der Anionic Transfer Radical Polymerisation (ATRP), wie in Bing Du et al., "Localization of functionalized MWCNT in SAN/PPE blends and their influence on rheological properties", Polymer 53(24), 5491-5501 (2012) oder Bing Du et al., "Functionalization of MWCNT with P(MMA-co-S) copolymers via ATRP: Influence on localization of MWCNT in SAN/PPE 40/60 blends and on rheological and dielectric properties of the composites", Polymer 54(22), 6165-6176 (2013) beschrieben.

Auch eine Pyren-POSS-Funktionalisierung von CNT ist erfindungsgemäß vorteilhaft (vgl. Sh. Majeed et al., "Pyrene-POSS nanohybrid as a dispersant for carbon nanotubes in solvents of various polarities: its synthesis and application in the preparation of a composite membrane", Nanoscale Research Letters 7:296 (2012)), weil auf diese Weise viele Eigenschaften an die CNT gebunden werden können, ohne die Bindungsstruktur der Kohlenstoffnanoröhren zu verändern. Eine Funktionalisierung kann z.B. durchgeführt werden, um die Wechselwirkungen der Nanoröhren mit der Polymermatrix so zu modifizieren, dass die thermische Leitfähigkeit oder die mechanische Festigkeit des Komposites gegenüber einem Komposit mit unfunktionalisierten Nanoröhren erhöht wird. In der Anwendung für eine poröse Membran bzw. Filter kann über Funktionalisierung der Kohlenstoffnanoröhren Biofouling noch weiter erschwert, die Hydrophobie erhöht oder gesenkt, die Oberfläche zusätzlich mit katalytisch wirksamen Nebengruppen oder Nanopartikeln, beispielsweise Silber, versehen oder auch die mechanische Festigkeit des Komposites weiter erhöht werden, während gleichzeitig thermische und elektrische Leitfähigkeit im Vergleich zum reinen Polymer verbessert sind.

Die elektrische Leitfähigkeit wird auch durch eine Funktionalisierung der CNT mit Silbernanopartikeln verbessert. Weitere geeignete Funktionsträger für eine Funktionalisierung der CNT sind Gold, Platin und Palladium. Silber- und Platinnanopartikel haben außerdem eine antimikrobielle und katalytische Wirkung.

Zur Verbesserung der mechanischen Eigenschaften können bei Polyetherimid (PEI) beispielsweise -COOH-Gruppen oder die nichtkovalente Bindung von Polyfluoren eingesetzt werden.

In einer bevorzugten Ausführungsform wird das Sinterpulver in der Sinterform vor dem drucklosen Sintern, also vor einer Temperaturerhöhung, durch Ausüben eines Drucks auf das Sinterpulver vorverdichtet. Durch das Vorverdichten kann die zu erzielende Porosität ebenfalls gezielt eingestellt werden. Das Vorverdichten erfolgt ohne erhöhte Temperatur, insbesondere bei hohen Drücken, und ist somit von dem eigentlichen Sinterverfahrensschritt getrennt. Ein Heißpressen findet nicht statt. Durch Vorkompression bei Raumtemperatur und einem Druck vorzugsweise zwischen 50 und 150 MPa werden Lufteinschlüsse eliminiert und ein Grünkörper hergestellt. Lufteinschlüsse bedeuten in diesem Zusammenhang Hohlräume von der Größe eines oder mehrerer Pulverpartikel, nicht jedoch die ohnehin bestehenden Poren zwischen den aneinander angrenzenden Pulverpartikeln.

Im Verfahrensschritt c) erfolgt das druckarme Sintern in einer vorteilhaften Weiterbildung in einer Vorsinterphase und einer Endsinterphase, gegebenenfalls mit einer kurzen Abkühlphase vor der Endsinterphase. Dabei wird vorzugsweise in der Vorsinterphase in einer geschlossenen Sinterform und in der Endsinterphase in einer offenen Form gesintert, wobei hierzu insbesondere ein Deckel oder aufliegender Zylinder der Sinterform entfernt wird. In der offenen Form erfolgt das Sintern drucklos. Das Entnehmen des Deckels und das Sintern des Sinterpulvers in der offenen Teilform nach dem Vorsintern haben den Vorteil, dass diese spätere Entnahme des Deckels Spannungsrisse durch das Erwärmen des komprimierten Pulvers verhindert. In der Vorsinterphase und der Endsinterphase wird jeweils vorzugsweise die gleiche Sintertemperatur verwendet.

Während der Vorsinterphase wird vorzugsweise kein externer Druck auf den Deckel bzw. das Sinterpulver ausgeübt. Der aufliegende Deckel übt seinerseits lediglich einen Druck von einigen kPa aufgrund seiner Gewichtskraft aus, also drei oder mehr Größenordnungen weniger als durch eine üblicherweise verwendete Pressvorrichtung aufgebracht wird.

Bei besonders hohem Anteil an Dekorationspartikeln oder besonders niedriger Diffusion ist es vorteilhaft, während der Vorsinterphase oder der Abkühlungsphase für eine begrenzte Dauer einen externen Druck auf das Sinterpulver auszuüben. Da dieser Druck nur über einen Teilzeitraum des gesamten Sintervorgangs ausgeübt wird, schließt sich hierdurch die durchgängige Porenstruktur nicht, so dass der Sintervorgang insgesamt immer noch druckarm ist.

Das Sinterpulver wird vorzugsweise im Bereich oberhalb der Glasübergangstemperatur oder bei teilkristallinen Polymeren oberhalb der Schmelztemperatur oder zwischen der Glasübergangstemperatur und der Schmelztemperatur des thermoplastischen Polymers gesintert. Die Glasübergangstemperaturen der amorphen Polymere bzw. Schmelztemperaturen der (teilkristallinen) Polymere sind bekannt oder in bekannten Standardversuchen, beispielsweise mittels Differentialkalorimetrie (differential scanning calorimetry, DSC), bestimmbar. Teilkristalline Polymere haben amorphe und kristalline Bestandteile, für die jeweils eine Glasübergangstemperatur (amorphe Regionen) bzw. eine Schmelztemperatur (kristalline Regionen) existiert, wobei die Schmelztemperatur oberhalb der Glasübergangstemperatur liegt. In diesem Fall kann also oberhalb der Schmelztemperatur oder zwischen Schmelz- und Glasübergangstemperatur gesintert werden.

Vorzugsweise erfolgt das Sintern über eine Dauer zwischen 1 und 30 Minuten, insbesondere zwischen 10 und 20 Minuten. Die vergleichsweise kurze Sinterdauer resultiert in einer weiterhin durchgängigen Porosität des Sinterprodukts, die u.a. durch die Sinterzeit bzw. Sinterdauer einstellbar ist, bis hin zu einer verschwindenden durchgängigen Porosität. Selbst bei einem vollständigen Verschwinden der Porosität innerhalb der Sinterdauer bleibt die ursprüngliche zusammenhängende Anordnung der Nano- und/oder Mikropartikel der oberflächlichen Dekoration der Pulverpartikel im Wesentlichen erhalten.

Im Rahmen der vorliegenden Erfindung ist ebenfalls vorteilhafterweise vorgesehen, unterschiedliche polymere Pulverpartikel und/oder unterschiedliche Nano- und/oder Mikropartikel zusammen zu verarbeiten. In Bezug auf die Pulverpartikel kann dies bedeuten, unterschiedliche Partikelgrößen, Molekulargewichte eines Polymers oder unterschiedliche Polymere zu verwenden, wobei die unterschiedlichen Partikel bzw. Komponenten dementsprechend unterschiedliche Viskositäten, Glasübergangs- und/oder Schmelztemperaturen aufweisen. Mittels unterschiedlicher Dekorationspartikel lassen sich unterschiedliche Funktionalitäten miteinander kombinieren.

In einer bevorzugten Weiterbildung wird dem Sinterpulver vor dem Sintern wenigstens ein weiterer Bestandteil beigemischt, insbesondere Aktivkohle. Beimischungen im Bereich von 0,5% bis etwa 8%, insbesondere bis 3%, können die mechanische Stabilität erhöhen oder eigene Filtrationseigenschaften im Filter entfalten.

Vorzugsweise führt das Sintern zu einem permeablen Sinterprodukt mit durchgängiger Porosität. Permeabel bedeutet in diesem Zusammenhang, dass eine durchgängige Porenstruktur erhalten bleibt, durch die Flüssigkeiten oder Gase das Sinterprodukt durchströmen können. Dies ist zu unterscheiden von beispielsweise Gastrennmembranen, bei denen beispielsweise kleine Gasmoleküle die ansonsten dichte Polymerstruktur mittels Diffusion durchqueren, während größere Gasmoleküle zurückgehalten werden.

Die der Erfindung zugrunde liegende Aufgabe wird auch durch ein Sinterprodukt durchgängiger Porosität, insbesondere einen permeablen Filter mit durchgängiger Porosität, gelöst, das in einem zuvor beschriebenen erfindungsgemäßen Verfahren herstellbar oder hergestellt ist, das dadurch weitergebildet ist, dass es auf mit Nanound/oder Mikropartikeln oberflächlich dekorierten zum Sinterprodukt zusammengesinterten Pulverpartikeln aus einem, insbesondere thermoplastischen, Polymer beruht, wobei die Nano- und/oder Mikropartikel im Sinterprodukt weiterhin oberflächlich an und/oder in den zusammengesinterten Pulverpartikeln angeordnet und lokalisiert sind und eine zusammenhängende Netzwerkstruktur der Nanound/oder Mikropartikel ausbilden, wobei die durchgängige Porosität ein Ergebnis eines Abbrechens des Sinterns vor einer Schließung der durchgängigen Porenstruktur ist.

Das erfindungsgemäße Sinterprodukt weist die zuvor genannten Eigenschaften, Vorteile und Merkmale auf, die aus dem erfindungsgemäßen Sinterverfahren resultieren.

Vorzugsweise sind die Nano- und/oder Mikropartikel Kohlenstoffnanoröhrchen, Graphenpartikel, Rußpartikel, Titandioxidpartikel und/oder magnetische metallische Partikel.

Ebenfalls vorteilhafterweise sind die Nano- und/oder Mikropartikel chemisch funktionalisiert.

Schließlich sind vorzugsweise mittels der Menge an Nano- und/oder Mikropartikeln und der Sinterintensität zusätzlich zu einem Zusammenhalt des Sinterprodukts eine Perkolationsschwelle für ein Perkolationsphänomen, insbesondere eine elektrische Leitfähigkeit, überschritten.

Die der Erfindung zugrunde liegende Aufgabe wird ferner durch ein Filtrationsmodul, insbesondere Mikrofiltrationsmodul, mit wenigstens einem zuvor beschriebenen erfindungsgemäßen als permeablen Filter ausgebildeten Sinterprodukt gelöst, sowie durch eine Verwendung eines zuvor beschriebenen als permeabler Filter mit durchgängiger Porenstruktur ausgebildeten Sinterprodukts zur Mikrofiltration.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a) bis d):: Verfahrensschritte des erfindungsgemäßen Sinterverfahrens,
- Fig. 2a), b):: schematische Zeichnungen des Sintermaterials vor und nach der Sinterung,
- Fig. 3a), b):: eine Draufsicht und eine Schnittaufnahme eines erfindungsgemäßen Sinterprodukts und
- Fig. 4 a)-c): eine Draufsicht und zwei Schnittaufnahmen eines weiteren erfindungsgemäßen Sinterprodukts.

In den Zeichnungen sind jeweils gleiche oder gleichartige Elemente und/oder Teile mit denselben Bezugsziffern versehen, so dass von einer erneuten Vorstellung jeweils abgesehen wird.

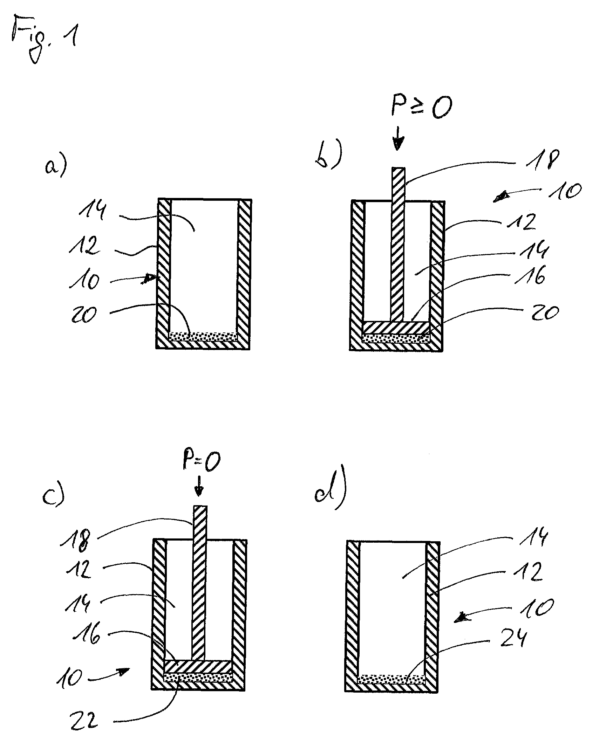

In Fig. 1a) ist der Ausgangspunkt des erfindungsgemäßen Sinterverfahrens schematisch dargestellt. In einer offenen Teilform 12 einer schließbaren Sinterform 10, die im Querschnitt dargestellt ist, ist ein Sinterpulver 20, das erfindungsgemäß oberflächlich mit Nanound/oder Mikropartikeln dekoriert ist, trocken eingefüllt. Die Teilform 12 hat einen zylindrischen Hohlraum 14, der das Sinterpulver 20 aufnimmt. Der Hohlraum 14 ist nach oben offen.

Das dekorierte Sinterpulver 20 kann in verschiedener Weise dekoriert werden, beispielsweise über ein mechanisches Verfahren mit an der Partikeloberfläche befindlichen Kohlenstoffnanoröhren versehen werden, wie dies beispielsweise in DE 10 2010 013 210 A1 offenbart ist. Damit sind die Kohlenstoffnanoröhren adhäsiv an die Polymerpartikeloberfläche gebunden. Es ist somit nicht notwendig, Flüssigkeit, wie Wasser und Lösungsmittel, zu verwenden, und es werden Zwischenschritte minimiert, da die Partikel unmittelbar zum Sintern einer porösen oder nicht-porösen Struktur verwendet werden können. Durch die Kohlenstoffnanoröhren wird aufgrund der thermischen Leitfähigkeit der Nanoröhren das thermische Gleichgewicht während des Sinterns schneller erreicht. Außerdem liegen keine freien vereinzelten Kohlenstoffnanoröhren oder andere Nanound/oder Mikropartikel vor, die über die Luft in die Umwelt gelangen könnten. Lösungsmittel oder verunreinigtes Wasser werden ebenfalls vermieden sowie ein höherer Arbeitsaufwand durch weitere Zwischenschritte.

Fig. 1b) zeigt, wie ein Deckel 16, der mittels eines Stabs 18 mit einem Druck p beaufschlagbar ist, in den Hohlraum 14 der offenen Teilform 12 eingesetzt wird und somit die Sinterform 10 geschlossen wird. Mittels des Deckels 16 und des Stabs 18 wird das Sinterpulver 20 auf Klopfdichte gebracht, ggf. vorverdichtet. Durch eine Vorverdichtung kann die Porosität des zu erzeugenden Sinterprodukts verringert werden. In Falle einer Vorverdichtung ist der ausgeübte Druck p größer als 0, und zwar üblicherweise deutlich größer als der manuell ausübbare Druck. Durch rasche Hoch- und Tiefbewegung der Form mit abrupten Stopp am tiefsten Punkt wird das Sinterpulver 20 auf Klopfdichte gebracht, ggf. vorverdichtet, gegebenenfalls unter Einsatz einer (nicht dargestellten) Pressvorrichtung. Die Gewichtskraft des Deckels 16 und des Stabs 18 sind demgegenüber vernachlässigbar und fließen nicht in den ausgeübten Druck p ein.

In Fig. 1c) ist dargestellt, dass der äußere Druck p inzwischen auf 0, also drucklos, gesetzt worden ist. Gegebenenfalls wird die Sinterform 10 hierzu aus einer nicht dargestellten Pressvorrichtung entnommen und nunmehr eine erhöhte Temperatur eingestellt, die oberhalb der Glasübergangstemperatur oder Schmelztemperatur des Sinterpulvers 20 liegt. So verbinden sich die Pulverpartikel des Sinterpulvers 20 zu einem zusammenhängenden Körper, vorliegend in Form einer flachen Scheibe oder Membran. Dieser Körper aus vorgesintertem Sinterpulver 22 ist noch sehr offenporig.

Anschließend wird in Fig. 1d) der Deckel 16 mit dem Stab 18 entnommen und das vorgesinterte Sinterpulver 22 zum Sinterprodukt 24 zu Ende gesintert. Auch hier bleibt vorzugsweise eine durchgängige Porosität erhalten.

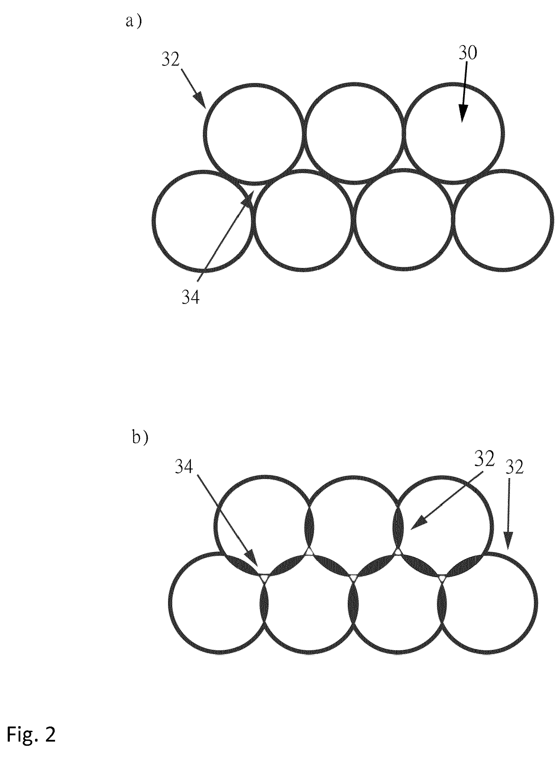

Fig. 2 stellt in den Fig. 2a) und 2b) eine schematische Ausschnittsvergrößerung aus dem Sinterpulver 20 dar. Dieses umfasst Pulverpartikel 30, deren dekorierte Randzonen 32 in Fig. 2a) im ungesinterten Zustand gezeigt sind. Dort, wo die Pulverpartikel 30 einander berühren, berühren sich auch die dekorierten Randzonen 32 der Pulverpartikel 30. Zwischen den Pulverpartikeln 30 bestehen große Poren 34.

Fig. 2b) zeigt den Zustand nach dem erfindungsgemäßen Sintern. Die aneinander angrenzenden Pulverpartikel 30 sind durch Diffusion des Materials miteinander verbunden, wobei die dekorierten Randzonen 32 ineinander übergegangen sind und sich hiermit eine sehr hohe lokal konzentrierte Ansammlung von Nano- und/oder Mikropartikeln ergibt, die zu einer durchgehenden Struktur führt und somit, beispielsweise im Falle von CNT, Graphen oder Rußpartikeln zu einer durchgängigen elektrischen Leitfähigkeit führen. Gleichzeitig sind in der Struktur noch Poren 34 übrig geblieben, die vorzugsweise eine durchgängige Porenstruktur bzw. Porosität bilden. Diese kann gegebenenfalls aber auch geschlossen sein, wenn eine durchgängige Porosität nicht erwünscht ist.

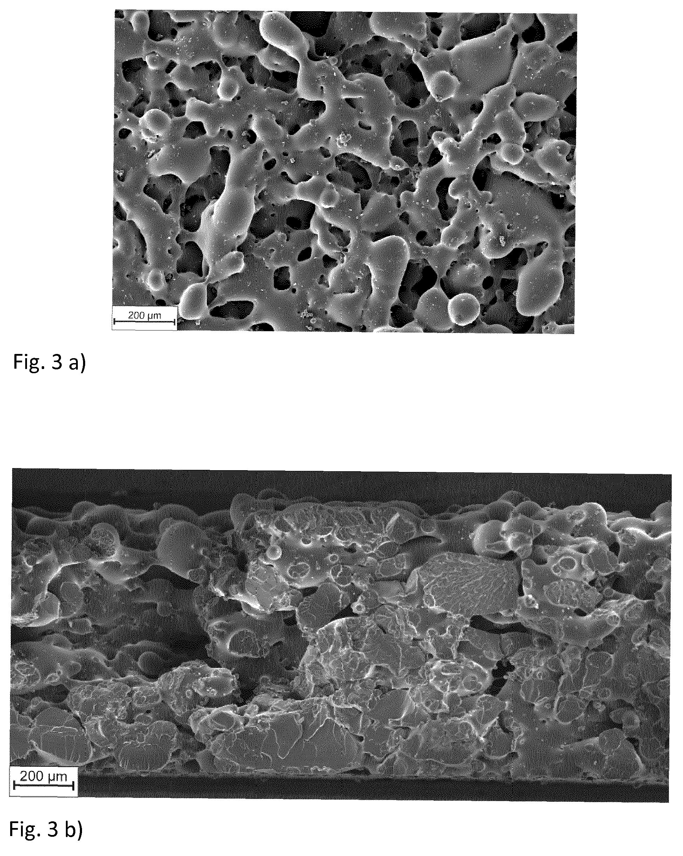

In Fig. 3a) und 3b) sind elektronenmikroskopische Aufnahmen eines erfindungsgemäß hergestellten Sinterkörpers in Form einer Membran bzw. eines Filters mit einer Dicke von knapp 1 mm dargestellt, wobei in Fig. 3a) eine Draufsicht auf die Membranoberfläche und in Fig. 3b) ein Querschnitt durch die Membran gezeigt ist. Es ergibt sich nach dem erfindungsgemäßen Sinterverfahren eine durchgängige offenporige Struktur. Die Nano- und/oder Mikropartikel sind bei der gezeigten Vergrößerung nicht erkennbar.

Die Herstellung erfolgte durch Verwendung eines mit 2 Gew.-% CNT dekorierten Pulvers aus dem Verfahren nach DE 10 2010 013 210 A1 auf der Grundlage von Polyetherimid, in diesem Fall Ultem™ 1000P von Sabic Innovative Plastics, das in eine zylindrische Sinterform mit einem Innendurchmesser von 47 mm gefüllt wurde. Die Sinterform bestand aus zwei Teilen, die aufeinander gesteckt wurden, wie schematisch in Fig. 1 a) bis d) gezeigt.

Nach Bringen des Pulvers mit einem durchschnittlichen Partikeldurchmesser von ca. 100 µm auf Klopfdichte und Glätten mittels eines rotierbaren Zylinders bzw. Deckels ohne Vorkomprimierung wurde das Pulver zu einem porösen Körper gesintert. Eine Sintertemperatur von 300°C wurde 15 Minuten lang gehalten.

Durch das drucklose Sintern über relativ kurze Zeiträume verbleibt der Großteil der Kohlenstoffnanoröhren an der Oberfläche der thermoplastischen Partikel oder sehr nah darunter, da Fließvorgänge minimiert werden. Es bildet sich somit ein Netzwerk von Nanoröhren entlang der Oberfläche der gesinterten Partikel, ohne dass sie über den Großteil des Volumens der gesinterten Struktur verteilt sind. Dies senkt die Perkolationsgrenze und ermöglicht elektrisch leitfähige offenporige Strukturen mit geringeren Gewichtsanteilen an Kohlenstoffnanoröhren (MWCNT) im Vergleich zu Strukturen mit homogener Verteilung über das gesamte Volumen.

Offenporige Strukturen der erzeugten Sinterprodukte bzw. Membranen wurden mittels Wasserduchflussexperimenten und den REM-Aufnahmen der Fig. 3a) und 3b) bestätigt. Es wurde ein Durchfluss von 100 ml in 1,3 Minuten bei 250 mbar Überdruck erreicht.

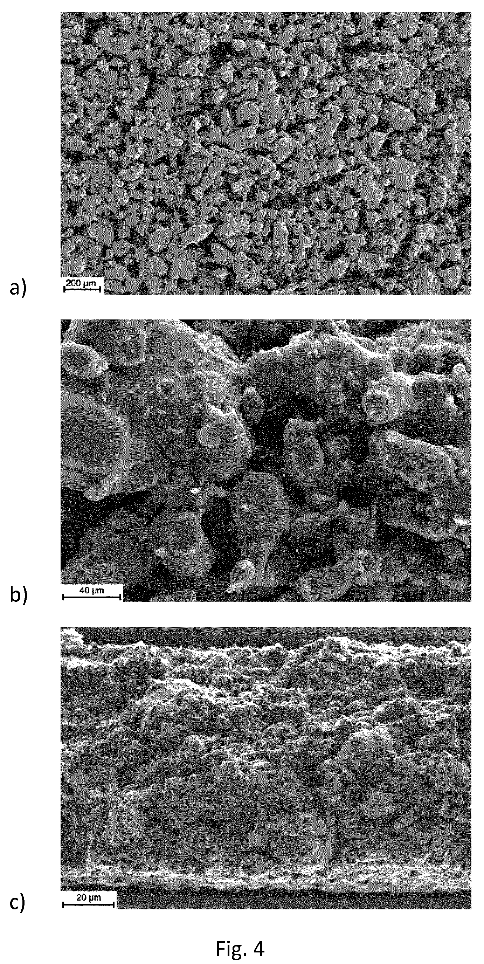

In den Figuren 4a) bis 4c) sind eine Draufsicht in Fig. 4a) und zwei Schnittansichten in Fig. 4b) und 4c) eines weiteren erfindungsgemäß hergestellten Sinterkörpers in Form eines flachen Filters in verschiedenen Maßstäben gezeigt. Auch hierbei handelt es sich um einen Filter auf der Basis von PEI mit 1 Gew.-% MWCNT.

Die Herstellung der Membran bzw. Filter wurde mit verschiedenen Mengen von MWCNT wiederholt. Die spezifischen Widerstände der erfindungsgemäß hergestellten Sinterprodukte wurden mit Hilfe der Vier-Punkt-Methode bestimmt und betrugen
5.560 Ωm bei 0,2 Gew.-% MWCNT,
325,01 Ωm bei 0,5 Gew.-% MWCNT,
42,15 Ωm bei 1,0 Gew.-% MWCNT,
7,3 Ωm bei 1,5 Gew.-% MWCNT,
1,67 Ωm bei 2,0 Gew.-% MWCNT,
0,86 Ωm bei 2,5 Gew.-% MWCNT und
0,52 Ωm bei 3,0 Gew.-% MWCNT,
was einer ungefähr logarithmischen Abnahme des spezifischen Widerstands mit dem Massenanteil an MWCNT entspricht.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 10: Sinterform
- 12: Teilform
- 14: zylindrischer Hohlraum
- 16: Deckel
- 18: Stab
- 20: Sinterpulver
- 22: vorgesintertes Sinterpulver
- 24: Sinterprodukt
- 30: Pulverpartikel
- 32: dekorierte Randzone
- 34: Pore

- p: externer Druck

## Patentansprüche

1. Sinterverfahren zur Herstellung eines Sinterprodukts (24), insbesondere eines permeablen Filters mit durchgängiger Porosität, mit den folgenden Verfahrensschritten:
a) Einfüllen eines trockenen Sinterpulvers (20) aus mit Nano- und/oder Mikropartikeln oberflächlich dekorierten Pulverpartikeln (30) aus wenigstens einem Polymer in eine Sinterform (10),
b) Bringen des Sinterpulvers (20) in der Sinterform (10) auf Klopfdichte,
c) druckarmes Sintern des Sinterpulvers (20) in der Sinterform (10) zu einem permeablen Sinterprodukt (24) mit durchgängiger Porosität.

2. Sinterverfahren nach Anspruch 1, **dadurch gekennzeichnet, dass** das Polymer ein thermoplastisches Polymer oder eine Mischung oder ein Blend aus mehreren thermoplastischen Polymeren ist, insbesondere Polystyrole, Polyolefine, insbesondere Polyethylen der Typen PE-LD, PE-HD, PE-LLD, PE-HMW, PE-UHMW oder Polypropylen, Polyamide, insbesondere PA-6, PA-66, PA-12 oder PA-11, Polyacrylnitril, Polyacrylsäure, PMMA, PET, PEEK, PEK, PES, PEI, PVDF, PC, PVC, PTFE, TPU, Cellulosederivate, insbesondere Celluloseacetat, Celluloseacetatphthalat oder Cellusloseacetobutyrat, PVB, PVA, PVAc, BMI, Vinylpolymere, Polyimide, Polyacetate, Polyester, Polyether, Polyacrylate, Polysilane oder Polyquinoxaline, oder thermoplastische Copolymere.

3. Sinterverfahren nach Anspruch 1 oder 2, **dadurch gekennzeichnet, dass** die Pulverpartikel (30) mit Nano- und/oder Mikropartikeln in Form von Kohlenstoffnanoröhrchen, Graphenpartikeln, Rußpartikeln, Titandioxidpartikeln und/oder magnetischen metallischen Partikeln oberflächlich dekoriert sind oder werden.

4. Sinterverfahren nach einem der Ansprüche 1 bis 3, **dadurch gekennzeichnet, dass** die Nano- und/oder Mikropartikel chemisch funktionalisiert sind, insbesondere durch Hinzufügung von hydrophilisierenden Gruppen.

5. Sinterverfahren nach einem der Ansprüche 1 bis 4, **dadurch gekennzeichnet, dass** das Sinterpulver (20) in der Sinterform (10) vor dem drucklosen Sintern durch Ausüben eines Drucks, insbesondere zwischen 50 und 150 MPa, auf das Sinterpulver (20) vorverdichtet wird.

6. Sinterverfahren nach einem der Ansprüche 1 bis 5, **dadurch gekennzeichnet, dass** das druckarme Sintern in einer Vorsinterphase und einer Endsinterphase erfolgt, gegebenenfalls mit einer kurzen Abkühlphase vor der Endsinterphase.

7. Sinterverfahren nach Anspruch 6, **dadurch gekennzeichnet, dass** in der Vorsinterphase in einer geschlossenen Sinterform (10) und in der Endsinterphase in einer offenen Form gesintert wird.

8. Sinterverfahren nach einem der Ansprüche 1 bis 7, **dadurch gekennzeichnet, dass** das Sinterpulver (20) im Bereich oberhalb der Glasübergangstemperatur oder bei teilkristallinen Polymeren oberhalb der Schmelztemperatur des thermoplastischen Polymers gesintert wird.

9. Sinterverfahren nach einem der Ansprüche 1 bis 8, **dadurch gekennzeichnet, dass** das Sintern über eine Dauer zwischen 1 und 30 Minuten, insbesondere zwischen 10 und 20 Minuten, erfolgt.

10. Sinterverfahren nach einem der Ansprüche 1 bis 9, **dadurch gekennzeichnet, dass** unterschiedliche polymere Pulverpartikel und/oder unterschiedliche Nano- und/oder Mikropartikel zusammen verarbeitet werden.

11. Sinterverfahren nach einem der Ansprüche 1 bis 10, **dadurch gekennzeichnet, dass** dem Sinterpulver vor dem Sintern wenigstens ein weiterer Bestandteil beigemischt wird, insbesondere Aktivkohle, insbesondere in einem Bereich von 0,5% bis etwa 8% Gew.-%, insbesondere bis 3 Gew.-%.

12. Sinterverfahren nach einem der Ansprüche 1 bis 11, **dadurch gekennzeichnet, dass** das Sintern zu einem permeablen Sinterprodukt (24) mit durchgängiger Porosität führt.

13. Sinterprodukt (24) mit durchgängiger Porosität, insbesondere permeabler Filter mit durchgängiger Porosität, herstellbar oder hergestellt in einem Verfahren nach einem der Ansprüche 1 bis 12, **dadurch gekennzeichnet, dass** es auf mit Nano- und/oder Mikropartikeln oberflächlich dekorierten zum Sinterprodukt (24) zusammengesinterten Pulverpartikeln (30) aus einem, insbesondere thermoplastischen, Polymer beruht, wobei die Nano- und/oder Mikropartikel im Sinterprodukt (24) weiterhin oberflächlich an und/oder in den zusammengesinterten Pulverpartikeln (30) angeordnet und lokalisiert sind und eine zusammenhängende Netzwerkstruktur der Nano- und/oder Mikropartikel ausbilden, wobei die durchgängige Porosität ein Ergebnis eines Abbrechens des Sinterns vor einer Schließung der durchgängigen Porenstruktur ist.

14. Sinterprodukt nach Anspruch 13, **dadurch gekennzeichnet, dass** die Nano- und/oder Mikropartikel Kohlenstoffnanoröhrchen, Graphenpartikel, Rußpartikel, Titandioxidpartikel und/oder magnetische metallische Partikel sind.

15. Sinterprodukt nach Anspruch 13 oder 14, **dadurch gekennzeichnet, dass** die Nano- und/oder Mikropartikel chemisch funktionalisiert sind.

16. Sinterprodukt nach einem der Ansprüche 13 bis 15, **dadurch gekennzeichnet, dass** mittels der Menge an Nano- und/oder Mikropartikeln und der Sinterintensität zusätzlich zu einem Zusammenhalt des Sinterprodukts (24) eine Perkolationsschwelle für ein Perkolationsphänomen, insbesondere eine elektrische Leitfähigkeit, überschritten ist.

17. Filtrationsmodul, insbesondere Mikrofiltrationsmodul, mit wenigstens einem als permeablen Filter ausgebildeten Sinterprodukt nach einem der Ansprüche 13 bis 16.

18. Verwendung eines als permeablen Filter mit durchgängiger Porenstruktur ausgebildeten Sinterprodukts (24) nach einem der Ansprüche 13 bis 16 zur Mikrofiltration.

## Claims

1. A sintering method for producing a sintered product (24), in particular a permeable filter with a passable porosity, comprising the following method steps:
a) adding to a sintering mold (10) a dry sintering powder (20) consisting of powder particles (30) decorated on the surface with nanoparticles and/or microparticles consisting of at least one polymer,
b) bringing the sintering powder (20) in the sintering mold (10) to tap density,
c) low-pressure sintering of the sintering powder (20) in the sintering mold (10) to a permeable sintered product (24) with a passable porosity.

2. The sintering method according to claim 1, **characterized in that** the polymer is a thermoplastic polymer, or a mixture or blend consisting of a plurality of thermoplastic polymers, in particular polystyrenes, polyolefins, in particular polyethylene of the types PE-LD, PE-HD, PE-LLD, PE-HMW, PE-UHMW or polypropylene, polyamides, in particular PA-6, PA-66, PA-12 or PA-11, polyacrylonitrile, polyacrylic acid, PMMA, PET, PEEK, PEK, PES, PE1, PVDF, PC, PVC, PTFE, TPU, cellulose derivatives, in particular cellulose acetate, cellulose acetate phthalate or cellulose acetobutyrate, PVB, PVA, PVAc, BMI, vinyl polymers, polyimides, polyacetates, polyesters, polyethers, polyacrylates, polysilanes or polyquinoxalines, or thermoplastic copolymers.

3. The sintering method according to claim 1 or 2, **characterized in that** the powder particles (30) are or will be decorated on the surface with nanoparticles and/or microparticles in the form of carbon nanotubes, graphene particles, carbon black particles, titanium dioxide particles and/or magnetic metallic particles.

4. The sintering method according to one of claims 1 to 3, **characterized in that** the nanoparticles and/or microparticles are chemically functionalized, in particular by adding hydrophilizing groups.

5. The sintering method according to one of claims 1 to 4, **characterized in that** the sintering powder (20) in the sintering mold (10) is precompressed before pressure-free sintering by exerting a pressure, in particular between 50 and 150 MPa, on the sintering powder (20).

6. The sintering method according to one of claims 1 to 5, **characterized in that** low-pressure sintering is carried out in a pre-sintering phase and an end sintering phase, possibly with a short cooling phase before the end sintering phase.

7. The sintering method according to claim 6, **characterized in that** sintering is carried out in a closed sintering mold (10) in the pre-sintering phase, and in an open mold in the end sintering phase.

8. The sintering method according to one of claims 1 to 7, **characterized in that** the sintering powder (20) is sintered in the range above the glass transition temperature or, in the case of partially-crystalline polymers, above the melting temperature of the thermoplastic polymer.

9. The sintering method according to one of claims 1 to 8, **characterized in that** sintering is carried out over a period between 1 and 30 minutes, in particular between 10 and 20 minutes.

10. The sintering method according to one of claims 1 to 9, **characterized in that** different polymer powder particles and/or different nanoparticles and/or microparticles are processed together.

11. The sintering method according to one of claims 1 to 10, **characterized in that** at least one additional component, in particular active charcoal, in particular within a range of 0.5% to about 8% by weight, in particular up to 3% by weight, is added to the sintering powder before sintering.

12. The sintering method according to one of claims 1 to 11, **characterized in that** sintering produces a permeable sintered product (24) with passable porosity.

13. A sintered product (24) with a passable porosity, in particular a permeable filter with a passable porosity, producible or produced in a method according to one of claims 1 to 12, **characterized in that** it is based on powder particles (30) that are decorated on the surface with nanoparticles and/or microparticles and sintered together into the sintered product (24) and consist of an, in particular thermoplastic, polymer, wherein the nanoparticles and/or microparticles in the sintered product (24) are still arranged and located on and/or in the sintered-together powder particles (30) and form a cohesive network structure of the nanoparticles and/or microparticles, wherein the passable porosity is a result of a termination of sintering before the passable pore structure closes.

14. The sintered product according to claim 13, **characterized in that** the nanoparticles and/or microparticles are carbon nanotubes, graphene particles, carbon black particles, titanium dioxide particles and/or magnetic metallic particles.

15. The sintered product according to claim 13 or 14, **characterized in that** the nanoparticles and/or microparticles are chemically functionalized.

16. The sintered product according to one of claims 13 to 15, **characterized in that**, in addition to a cohesion of the sintered product (24), a percolation threshold for a percolation phenomenon, in particular electrical conductivity, is exceeded by means of the quantity of nanoparticles and/or microparticles and the sintering intensity.

17. A filtration module, in particular a microfiltration module, having at least one sintered product according to one of claims 13 to 16 formed as a permeable filter.

18. A use for microfiltration of a sintered product (24) formed as a permeable filter with a passable pore structure according to one of claims 13 to 16.

## Revendications

1. Procédé de frittage pour obtenir un produit fritté (24), en particulier un filtre perméable à porosité ininterrompue, comprenant les étapes de procédé suivantes :
a) l'introduction d'une poudre sèche de frittage (20) à base de nano- et / ou de microparticules superficiellement décorées de particules de poudre (30) d'au moins un polymère dans un moule de frittage (10),
b) le transfert de la poudre de frittage (20) dans le moule de frittage (10) selon la densité tapée,
c) le frittage à basse pression de la poudre de frittage (20) dans le moule de frittage (10) en un produit fritté perméable (24) avec une porosité ininterrompue.

2. Procédé de frittage selon la revendication 1, **caractérisé en ce que** le polymère est un polymère thermoplastique ou une pluralité ou un mélange de plusieurs polymères thermoplastiques, en particulier, des polystyrènes, des polyoléfines, notamment, du polyéthylène de type PE-LD, PE-HD, PE-LLD, PE-HMW, PE-UHMW ou du polypropylène, des polyamides, en particulier, de type PA-6, PA-66, PA-12 ou PA-11, du polyacrylonitrile, de l'acide polyacrylique, du PMMA, PET, PEEK, PEK, PES, PEI, PVDF, PC, PVC, PTFE, TPU, les dérivés de cellulose, notamment de l'acétate de cellulose, de l'acétophtalate de cellulose ou de l'acétobutyrate de cellulose, du PVB, PVA, PVAc, BMI, des polymères vinyliques, des polyimides, des polyacétates, des polyesters, des polyéthers, des polyacrylates, des polysilanes ou polyquinoxaline, ou des copolymères thermoplastiques.

3. Procédé de frittage selon la revendication 1 ou la revendication 2, **caractérisé en ce que** les particules de poudre (30) avec des nano- et / ou des microparticules superficiellement décorées sont sous la forme de nanotubes de carbone, de particules de graphène, de particules de suie, de particules de dioxyde de titane et / ou de particules métalliques magnétiques.

4. Procédé de frittage selon l'une quelconque des revendications 1 à 3, **caractérisé en ce que** les nano- et / ou les microparticules sont fonctionnalisées chimiquement, en particulier par l'addition de groupes d'hydrophilisation.

5. Procédé de frittage selon l'une quelconque des revendications 1 à 4, **caractérisé en ce que** la poudre de frittage (20), dans le moule de frittage (10), est pré-comprimée avant le frittage sans pression de la poudre de frittage (20), par application d'une pression, en particulier d'une pression comprise entre 50 et 150 MPa.

6. Procédé de frittage selon l'une quelconque des revendications 1 à 5, **caractérisé en ce que** le frittage à basse pression est effectué dans une phase de commencement de frittage et une phase de fin de frittage, et, le cas échéant, avec un court refroidissement avant la phase de fin de frittage.

7. Procédé de frittage selon la revendication 6, **caractérisé en ce que** le frittage, lors de la phase de commencement de frittage, est réalisé dans un moule de frittage (10) fermé, et, lors de la phase de fin de frittage, est réalisé dans un moule ouvert.

8. Procédé de frittage selon l'une quelconque des revendications 1 à 7, **caractérisé en ce que** la poudre de frittage (20) est frittée dans la gamme de température située au-dessus de la température de transition vitreuse ou, en polymère semi-cristallin, au-dessus de la température de fusion du polymère thermoplastique.

9. Procédé de frittage selon l'une quelconque des revendications 1 à 8, **caractérisé en ce que** le frittage est réalisé selon une durée comprise entre 1 et 30 minutes, en particulier, entre 10 et 20 minutes.

10. Procédé de frittage selon l'une quelconque des revendications 1 à 9, **caractérisé en ce que** les différentes particules de poudre de polymère et / ou les différentes nano- et / ou microparticules sont traitées ensemble.

11. Procédé de frittage selon l'une quelconque des revendications 1 à 10, **caractérisé en ce que** la poudre frittée, avant le frittage, est mélangée avec au moins un autre constituant, en particulier, du charbon actif, en particulier dans une plage allant de 0,5% à environ 8% poids, en particulier, jusqu'à 3% poids.

12. Procédé de frittage selon l'une quelconque des revendications 1 à 11, **caractérisé en ce que** le frittage permet d'obtenir un produit fritté perméable (24) avec une porosité ininterrompue.

13. Produit fritté (24) avec une porosité ininterrompue, en particulier un filtre perméable à porosité ininterrompue, produit ou fabriqué par un procédé selon l'une quelconque des revendications 1 à 12, **caractérisé en ce qu'**il repose sur le frittage conjoint de nano- et / ou de microparticules décorées superficiellement d'un produit fritté (24) et de particules de poudre (30) d'un polymère, en particulier thermoplastique, lesdites nano- et / ou microparticules étant également agencées et localisées à la surface du produit fritté (24) et / ou frittées ensemble dans les particules de poudre (30) et formant un réseau cohérent sous forme de nano- et / ou microparticules, la porosité ininterrompue étant le résultat de la rupture du frittage avant la fermeture de la structure de pores ininterrompue.

14. Produit fritté selon la revendication 13, **caractérisé en ce que** les nano- et / ou les microparticules, les nanotubes de carbone, les particules de graphène, les particules de carbone, les particules de dioxyde de titane et / ou les particules métalliques sont magnétiques.

15. Produit fritté selon la revendication 13 ou la revendication 14, **caractérisé en ce que** les nano- et / ou les microparticules sont chimiquement fonctionnalisées.

16. Produit fritté selon l'une quelconque des revendications 13 à 15, **caractérisé en ce qu'**en outre, au moyen de la quantité de nano et / ou de microparticules et de l'intensité de frittage, en plus d'une cohésion du produit fritté (24), un seuil de percolation pour un phénomène de percolation, en particulier pour une conductivité électrique, est dépassé.

17. Module de filtration, en particulier module de microfiltration, avec au moins un produit fritté réalisé sous la forme d'un filtre perméable selon l'une quelconque des revendications 13 à 16.

18. Utilisation pour de la microfiltration d'un filtre perméable formé à partir d'un produit fritté (24) comprenant une structure de pores ininterrompus selon l'une quelconque des revendications 13 à 16.
